# EUROPÄISCHE PATENTSCHRIFT

(11) **EP 3 356 290 B1**
(45) Veröffentlichungstag und Bekanntmachung des Hinweises auf die Patenterteilung: **27.05.2020**
(21) Anmeldenummer: 16790271.7
(22) Anmeldetag: 04.10.2016
(51) Int. Cl.: C01B 7/01, C01B 7/00, C01B 7/09, F23D 14/24

(54) **NEUWERTIGE BRENNVORRICHTUNG ZUR ERZEUGUNG VON GASGEMISCHEN**
NEW TYPE OF BURNING DEVICE FOR PRODUCING GAS MIXTURES
NOUVEAU DISPOSITIF DE COMBUSTION POUR LA PRODUCTION DE MÉLANGES GAZEUX

(30) Priorität: 01.10.2015 US 201562235838 P
(43) Veröffentlichungstag der Anmeldung: 08.08.2018
(73) Patentinhaber: SGL Carbon SE, 65201 Wiesbaden (DE)
(72) Erfinder: KOCH, Christoph, 86405 Meitingen (DE); RASHIDI, Arash, Meitingen 86405 (DE); BIENHUELS, Christian, Meitingen 86405 (DE); SKARKE, Birgit, Meitingen 86405 (DE)
(86) Internationale Anmeldenummer: PCT/EP2016/073695
(87) Internationale Veröffentlichungsnummer: WO 2017/055639

(56) Entgegenhaltungen:
- EP-A1- 0 497 712
- EP-A1- 0 997 433
- EP-A1- 1 531 147
- BE-A1- 846 627
- DE-A1- 2 916 252
- US-A- 4 910 008
- US-A- 5 492 649
- Olaf Krause: "Refractory Ceramics" In: "Ullmann's Encyclopedia of Industrial Chemistry", 31 January 2014 (2014-01-31), Wiley-VCH, Weinheim, XP055561094, ISBN: 978-3-527-30673-2 vol. 43, pages 1-59, DOI: 10.1002/14356007.a23_001.pub2,

## Beschreibung

Die vorliegende Erfindung betrifft eine neuartige Brennvorrichtung zur Erzeugung von Wasserstoffverbindungen der Halogene.

Chlorwasserstoffsäure (Salzsäure), auch Chlorwasserstoff genannt, wird in der chemischen Industrie in verschiedenster Weise genutzt und weiterverarbeitet. Typische Anwendungsgebiete sind die Chloralkali-Elektrolyse oder die Herstellung von Vinylchlorid. Oft fällt die Chlorwasserstoffsäure als Nebenprodukt, wie beispielsweise bei der Chlorierung organischer Verbindungen an. Der Bedarf kann damit allerdings nicht gedeckt werden.
In der Industrie werden daher zur synthetischen Herstellung spezielle korrosionsbeständige Chlorwasserstoff-Syntheseanlagen eingesetzt. In diesen Anlagen reagieren Chlorgas und Wasserstoffgas bei Temperaturen von bis zu 2500 °C zu Chlorwasserstoffgas. Die Verbrennungsreaktion findet dabei in der Brennkammer statt. Der Brenner, durch den die Feed-Gase in die Brennkammer strömen, besteht aus zwei konzentrischen Rohren, wobei Chlorgas durch das innere und Wasserstoffgas durch das äußere Rohr zugeführt wird. In der Flamme oberhalb des Brenners findet die Verbrennungsreaktion statt. Um einen möglichst hohen Umsatz des Chlors zu erreichen, wird üblicherweise ein Wasserstoffüberschuss von 5 - 15% eingestellt. Am Austritt der Brennkammer ist die Reaktion abgeschlossen und das gebildete Chlorwasserstoffgas durchströmt den Absorptionsteil der Synthese, wo es zu Salzsäure absorbiert wird (US9415364).

Problematisch bei der Herstellung von Chlorwasserstoff ist eine unvollständige Verbrennung, welche einen erhöhten Anteil an freiem Chlor in der Produktsäure zur Folge hat. Aufgrund einer nicht ausreichenden Vermischung der Eduktgase liegt eine sehr lange und schmale Flammengeometrie vor, die wiederum eine große Brennkammer bedingt. Dies wirkt sich negativ auf die Höhe der Kosten aus.

Zur Herstellung von Bromwasserstoff schlägt BE 846 627 A1 vor, Brom als helikoidalen Strom zu führen und Wasserstoff von innen nach außen in diesen Strom zu injizieren.

Aufgabe der Erfindung ist daher die Bereitstellung einer Brennvorrichtung zur Erzeugung von Halogenwasserstoff, mit der eine verbesserte Vermischung von Halogengas und Wasserstoffgas erreicht wird und der freie Halogengehalt im Produkt verringert wird.

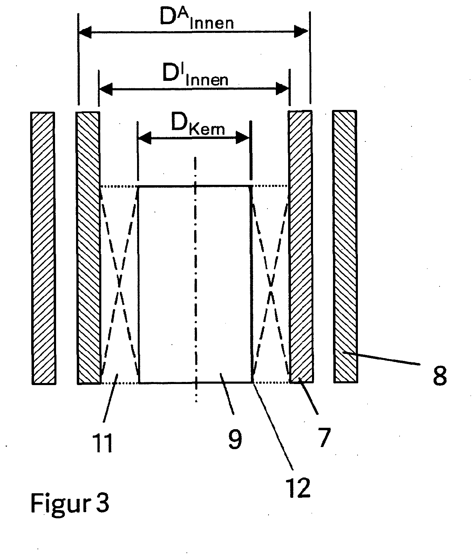

Die Aufgabe wird durch eine Brennvorrichtung zur Erzeugung von Halogenwasserstoff umfassend zumindest zwei konzentrisch angeordnete Brennrohre, wobei im inneren Brennrohr ein Drallerzeuger angeordnet ist und das äußere Brennrohr, das innere Brennrohr und der Drallerzeuger korrosionsbeständiges Material umfassen, ausgewählt aus der Gruppe bestehend aus Graphit, synthetischer Graphit, kunstharzimprägnierter Graphit, Siliziumcarbid, siliziumcarbidbeschichteter Graphit, Quarzglas, Aluminiumoxid oder beliebige Mischungen hieraus, gelöst.
Als Halogenwasserstoffe werden im Rahmen der Erfindung, Bromwasserstoff und Chlorwasserstoff angesehen, wobei bevorzugt Chlorwasserstoff verwendet wird. Wenn im Folgenden Chlorgas oder Chlorwasserstoff genannt wird, gilt entsprechendes auch für Bromgas oder Bromwasserstoff.
Im Rahmen der Erfindung wird unter konzentrisch angeordnete Brennrohre verstanden, dass in einem äußeren Brennrohr ein inneres Brennrohr angeordnet ist, wobei das innere Brennrohr in der Mitte des äußeren Brennrohrs angeordnet ist (siehe Figur 3). Das innere Brennrohr dient als Transportrohr für das Chlorgas, wohingegen das Wasserstoffgas durch den Spalt zwischen innerem und äußerem Brennrohr zugeführt wird. Als Drallerzeuger wird im Rahmen dieser Erfindung ein Bauteil verstanden, welches das Chlorgas in eine Drallströmung versetzt. Durch die dabei entstehenden Turbulenzen wird die Grenzfläche zwischen Chlor und Wasserstoff zusätzlich vergrößert, das heißt es wird eine verbesserte Vermischung erreicht und somit die benötigte Verweilzeit der Gase im Brennraum verkürzt, weshalb eine kürzere und stabilere Flamme im Vergleich zu einem Brenner ohne Drallerzeuger erhalten wird. Die kürzere Flamme ermöglicht eine Verwendung von kleineren Syntheseanlagen und die stabilere Flamme führt zu einem kontinuierlicheren Prozess. Wie stark sich die Flamme verkürzt und wie stabil die Flamme ist, sind von der Dimensionierung als auch der Kapazität der Syntheseeinheit abhängig. Durch die Verwendung eines Drallerzeugers im inneren Brennrohr und dem axialen Austritt des Wasserstoffs aus dem äußeren Brennrohr wird eine verbesserte Durchmischung der Eduktgase sowie die Ausbildung einer Rezirkulationszone nahe am Brenneraustritt erreicht. In der Rezirkulationszone wird heißes Gas zurück in Richtung Brennervorrichtungsaustritt gezogen, wodurch das aus der Brennvorrichtung austretende Gas vorgewärmt wird. Dies bedingt einen höheren Umsatz, d.h. der freie Chlorgehalt wird reduziert und die Flamme wird stabilisiert.

Der Drallerzeuger befindet sich im Zustrom des Chlorgases, da der Massenstrom des Chlorgases 20-mal so groß wie der Massenstrom des Wasserstoffgases ist. Somit kann die Drallwirkung besser ausgenutzt werden. Unter dem Massenstrom wird die Masse verstanden, die sich pro Zeiteinheit durch einen Querschnitt bewegt. Durch den Drallerzeuger lassen sich die Länge, Form, Stabilität sowie die Intensität der Flamme einstellen.

Vorteilhafterweise ist der Drallerzeuger in das innere Brennrohr eingeklebt, verkantet oder mittels eines Dornes befestigt.

Vorteilhafterweise schließen das äußere und innere Brennrohr auf gleicher Höhe ab-Dadurch werden die Gase erst unmittelbar beim Austritt aus der Brennvorrichtung vermischt. Daher handelt es sich um eine nicht-vorgemischte Verbrennung.

Vorteilhafterweise sind das äußere und das innere Brennrohr einteilig oder aus mehreren Segmenten aufgebaut.

Besonders bevorzugt sind das äußere Brennrohr, das innere Brennrohr und der Drallerzeuger aus Graphit, synthetischem Graphit, kunstharzimprägniertem oder beliebigen Mischungen hieraus, äußerst bevorzugt aus Graphit, synthetischem Graphit, phenolharzimprägnierter Graphit oder beliebigen Mischungen hieraus.

Bevorzugt weist der Drallerzeuger eine 0,5 bis 2- fache Länge, bevorzugt eine 1 bis 1,5-fache Länge des inneren Durchmessers des inneren Brennrohres auf. Im Rahmen der Erfindung wird unter dem inneren Durchmesser des inneren Brennrohres (D^{I}_{Innen}) der Durchmesser des inneren Brennrohres, d.h. der Durchmesser ohne Rohrwand verstanden. Unter dem Durchmesser des inneren Brennrohres wird der Außendurchmesser (D^{A}_{Innen}) des inneren Brennrohrs verstanden (siehe Figur 3). Bei einer Länge von kleiner als das 0,5-fache des inneren Durchmessers des inneren Brennrohres, ist die Länge nicht ausreichend um das zugeführte Chlorgas zu verdrallen. Somit treten die positiven Effekte durch den Drallerzeuger nicht auf. Bei einer Länge von größer als das 2-fache des inneren Durchmessers des inneren Brennrohres wird das zugeführte Chlorgas zweifach verdrallt, wobei die doppelte Verdrallung keine weitere Verbesserung der positiven Effekte durch den Drallerzeuger ergibt.

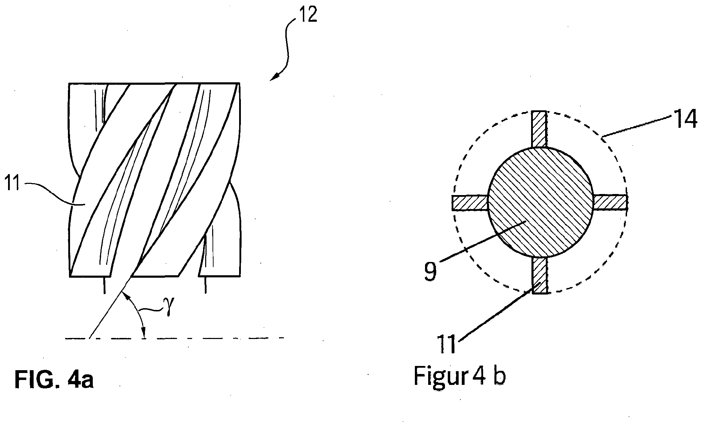

Vorteilhafterweise weist der Drallerzeuger einen Außendurchmesser von 30 mm bis 300 mm, bevorzugt 30 bis 280 mm auf.
Im Rahmen der Erfindung wird unter dem Außendurchmesser des Drallerzeugers, der Durchmesser aus dem Kern des Drallerzeugers und den Leitschaufeln verstanden (siehe hierzu Figur 4b). Bei einem kleineren Außendurchmesser des Drallerzeugers wird die Chlorgasgeschwindigkeit stark erhöht, wodurch sich die Vermischzeit verringert und somit der Umsatz verringert. Bei einem größeren Außendurchmesser nimmt die Chlorgasgeschwindigkeit ab, die erzeugten Turbulenzen sind geringer ausgeprägt und somit ist auch die Vermischung von Wasserstoff- und Chlorgas geringer und damit auch der Umsatz geringer und somit der freie Chlorgehalt im Produkt höher.

Vorteilhafterweise beträgt das Verhältnis von Kerndurchmesser zu Außendurchmesser des Drallerzeugers 1:2,5 bis 1:1,5, bevorzugt 1:2 bis 1:1,5.
Im Rahmen der Erfindung wird unter dem Kerndurchmesser der Durchmesser des Drallerzeugers ohne Leitschaufeln verstanden. Bei einem kleineren Verhältnis von Kerndurchmesser zu Außendurchmesser als 1:2,5, nimmt die Chlorgasgeschwindigkeit ab, wodurch die erzeugten Turbulenzen geringer ausgeprägt sind und somit auch die Vermischung von Wasserstoff- und Chlorgas geringer und damit auch der Umsatz geringer und somit der freie Chlorgehalt im Produkt höher. Bei einem größeren Verhältnis von Kerndurchmesser zu Außendurchmesser als 1:1,5 wird die Chlorgasgeschwindigkeit sehr hoch, wodurch sich die Vermischzeit von Wasserstoff- und Chlorgas verringert und dadurch der Umsatz geringer wird und somit der freie Chlorgehalt im Produkt höher.

In einer vorteilhaften Ausführungsform weist der Drallerzeuger mindestens zwei Leitschaufeln, bevorzugt mindestens 4 Leitschaufeln auf. Bei weniger als zwei Leitschaufeln ist der Massenstrom pro Teilkanal zu groß, was eine inhomogene Flamme bewirkt. Zudem ist die Vermischung von Wasserstoff- und Chlorgas geringer.
Für eine gute Vermischung von Wasserstoff- und Chlorgas ist eine symmetrische Verteilung der Leitschaufeln um den Kern des Drallerzeugers vorteilhaft. Vorteilhafterweise weisen die Leitschaufeln in der Draufsicht eine Rechteckform oder Trapezform auf.

In einer weiteren vorteilhaften Ausführungsform beträgt die freie Querschnittsfläche bezogen auf die gesamte angeströmte Querschnittsfläche des Drallerzeugers 15 bis 75 %, bevorzugt 20 bis 65 %. Bei einer kleineren freien Querschnittsfläche als 15% bezogen auf die gesamte angeströmte Querschnittsfläche des Drallerzeugers, wird die Chlorgasgeschwindigkeit zu hoch, wodurch sich der Umsatz verringert. Bei einer höheren Querschnittsfläche als 75 % bezogen auf die gesamte angeströmte Querschnittsfläche des Drallerzeugers, wird die Chlorgasgeschwindigkeit zu gering, wodurch sich der Umsatz verringert. Im Rahmen der Erfindung wird unter der freien Querschnittsfläche die Summe der freien Flächen zwischen den Leitschaufeln, d.h. dem Bereich durch den das Chlorgas strömt, bezeichnet. Unter der gesamten angeströmten Fläche des Drallerzeugers wird die gesamte Querschnittsfläche des Drallerzeugers verstanden.

In einer weiteren vorteilhaften Ausführungsform verlaufen die Leitschaufeln wendelförmig entlang der Längsachse.

Unter der Längsachse wird im Rahmen dieser Erfindung die Achse verstanden, die in Richtung der Chlorgasströmung verläuft.

Vorteilhafterweise ist die Ganghöhe der Leitschaufel 1 bis 2, bevorzugt 1. Unter der Ganghöhe wird die Anzahl der Umdrehungen einer Leitschaufel um den Kern des Drallerzeugers verstanden. Bei einer Ganghöhe von größer als 2 wird der Chlorgasstrom mehr als zweifach verdrallt und es wird keine weitere Verbesserung der Vermischung von Wasserstoff- und Chlorgas erreicht.

Vorteilhafterweise weisen die Leitschaufeln einen mittleren Anstellwinkel von 35° bis 85°, bevorzugt 40° bis 75°, äußerst bevorzugt 60° auf. Unter dem mittleren Anstellwinkel wird im Rahmen dieser Erfindung der Winkel zwischen der Richtung des anströmenden Fluids und der Oberfläche der Leitschaufeln verstanden (siehe hierzu Figur 4b).
Der mittlere Anstellwinkel hat einen erheblichen Einfluss auf die Geschwindigkeitsverteilung des Chlorgases und auf die Rückströmung des Chlorgases, welche zu einer Stabilisierung der Flamme führt. Bei einem kleineren mittleren Anstellwinkel als 35° wird der Chlorgasstrom sehr stark verdrallt und die Flamme sehr breit, was zu einer Temperaturerhöhung der Brennkammerwand führt. Bei einem größeren mittleren Anstellwinkel als 75° wird kein Verdrallung des Chlorgases erreicht.

Vorteilhafterweise tritt das zugeführte Wasserstoffgas aus dem äußeren Brennrohr axial aus. Der axiale Austritt des Wasserstoffgases aus dem äußeren Brennrohr verbessert die Vermischung von Wasserstoff- und Chlorgas, denn das aus dem inneren Brennrohr zugeführte Chlorgas wird durch das axial aus dem Spalt zwischen äußerem und innerem Brennrohr austretende Wasserstoffgas gedrängt, wodurch die Vermischung von Wasserstoff- und Chlorgas erhöht wird und dadurch der Umsatz erhöht wird und somit der freie Chlorgehalt im Produkt reduziert wird.

In einer weiteren vorteilhaften Ausführungsform ist im inneren Brennrohr auf der angeströmten Seite des Drallerzeugers ein Dorn angeordnet. Unter der angeströmten Seite des Drallerzeugers wird die Seite die der Chlorgaszufuhr zugewandt ist verstanden. Durch den Dorn wird der Drallerzeuger im inneren Brennrohr fixiert und lenkt den Chlorgasstrom in die Strömungskanäle, d.h. in die Zwischenräume zwischen den Leitschaufeln, des Drallerzeugers. Der Dorn kann einteilig oder aus mehreren Teilen aufgebaut sein. Die Länge des Dorns ist nicht begrenzt.

Vorteilhafterweise sind Dorndurchmesser und Kerndurchmesser gleich groß. Dadurch werden zusätzliche Turbulenzen beim Einströmen in den Drallerzeuger vermieden. Vorteilhafterweise verengt sich der Durchmesser des äußeren Brennrohres in Richtung des Brennraumes. Hierdurch wird die Geschwindigkeit des Wasserstoffgases erhöht, was zu einer verbesserten Vermischung von Wasserstoff- und Chlorgas führt, wodurch der Umsatz erhöht wird und somit der freie Chlorgehalt im Produkt reduziert wird.

In einer weiteren vorteilhaften Ausführungsform ist der Drallerzeuger im inneren Brennrohr maximal bis auf das 2-fache des Außendurchmessers des Drallerzeugers abgesenkt.
Dies bedeutet, dass der Drallerzeuger nicht mit dem inneren und äußeren Brennrohr bündig am Brennvorrichtungsaustritt abschließt, sondern in Richtung Gaszuführung abgesenkt ist.
Bevorzugt wird ein Verhältnis von Absenktiefe zu Innendurchmesser des inneren Brennrohres von 1:1. Das Absenken des Drallerzeugers führt dazu, dass der verdrallte Chlorgasstrom in einer kurzen Rohrstrecke geführt wird, bevor am Brennvorrichtungsaustritt die Ausbreitung des Chlorgasstromes erfolgt. Dadurch kann die Ausbreitung des Strahles verringert werden und somit die Temperaturbelastung an der Brennkammerwand reduziert werden. Zudem wird durch das Absenken des Drallerzeugers eine gleichmäßigere Durchmischung von Wasserstoff- und Chlorgas erreicht, wodurch der Umsatz erhöht wird und somit der freie Chlorgehalt im Produkt reduziert wird. Zudem wird die Reaktionszone über den ganzen Querschnitt der Brennkammer verteilt und die Temperatur der Brennkammerwand wird erniedrigt.
Je weiter der Drallerzeuger abgesenkt wird, desto kleiner wird der Drall am Brenneraustritt. Bei einer Absenktiefe von mehr als das 2-fache des Außendurchmessers des Drallerzeugers löst sich der Drall auf und der Drallerzeuger bewirkt keine verbesserte Vermischung von Wasserstoff- und Chlorgas.

Nachfolgend wird die vorliegende Erfindung rein beispielhaft anhand vorteilhafter Ausführungsformen und unter Bezugnahme auf die beigefügten Zeichnungen beschrieben. Die Erfindung wird durch die Figuren nicht beschränkt.
Figur 1 zeigt im Querschnitt einen Teil der Halogenwasserstoffsynthese-Einheit
Figur 2 zeigt im Querschnitt eine Brennvorrichtung
Figur 3 zeigt im Querschnitt einen Ausschnitt aus dem oberen Bereich der Brennvorrichtung
Figur 4a zeigt im einen Drallerzeuger
Figur 4b zeigt in Draufsicht einen Drallerzeuger
Figur 5 zeigt einen Querschnitt eines Drallerzeugers mit Dorn

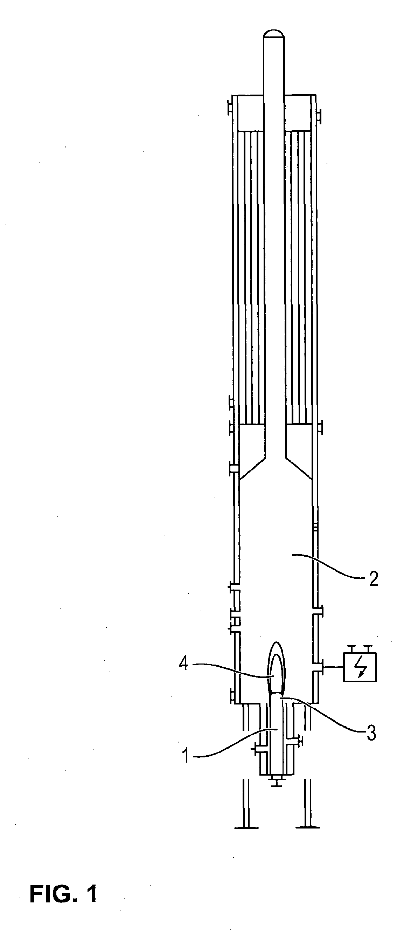

Figur 1 zeigt im Querschnitt einen Teil der Halogenwasserstoffsynthese-Einheit. Mittels der Brennvorrichtung (1) werden die Gase der Brennkammer (2) zugeführt. Am Brenneraustritt (3) treten die Gase aus der Brennvorrichtung aus. In der Brennkammer (2) reagieren die zugeführten Gase unter einer Verbrennung und bilden eine Flamme (4).

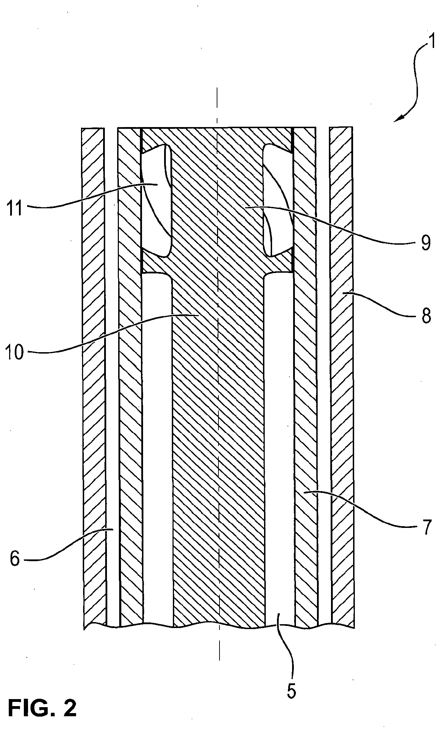

Figur 2 zeigt eine Brennvorrichtung (1) mit zwei konzentrisch angeordneten Brennrohren, dem inneren Brennrohr (7) und dem äußeren Brennrohr (8). Im inneren Brennrohr (7) ist ein Drallerzeuger (9) angeordnet, wobei dieser über einen Dorn (10) befestigt ist. Über den Spalt zwischen innerem und äußerem Brennrohr wird das Wasserstoffgas transportiert, wobei das Wasserstoffgas über die Zufuhr (6) dem Brenner zugeführt wird. Das Chlorgas wird dem inneren Brennrohr über (5) zugeführt.

Figur 3 zeigt im Querschnitt einen Ausschnitt aus dem oberen Bereich der Brennvorrichtung (1) mit zwei konzentrisch angeordneten Brennrohren, dem inneren Brennrohr (7) und dem äußeren Brennrohr (8). Das innere Brennrohr (7) weist einen Innendurchmesser D^{I}_{Innen} und einen Außendurchmesser D^{A}_{Innen} auf. Im inneren Brennrohr (7) befindet sich der Drallerzeuger (12). Der Drallerzeuger (12) weist Leitschaufeln (11) und einen Kern (9), wobei der Kern des Drallerzeugers einen Durchmesser von D_{Kern} aufweist, auf. Der Drallerzeuger (9) ist abgesenkt, da er nicht mit dem inneren (7) und äußeren (8) Brennrohr am Brenneraustritt abschließt.

Figur 4a zeigt einen Drallerzeuger (12). Der Drallerzeuger (12) weist Leitschaufeln (11) auf, wobei diese einen mittleren Anstellwinkel γ aufweisen.

Figur 4b zeigt eine Draufsicht auf einen Drallerzeuger (12), wobei der Drallerzeuger (12) Leitschaufeln (11), einen Kern (9) und einen Außendurchmesser (14) aufweist. Zwischen den Leitschaufeln (11) liegt die freie Querschnittsfläche, durch die das Chlorgas strömt.

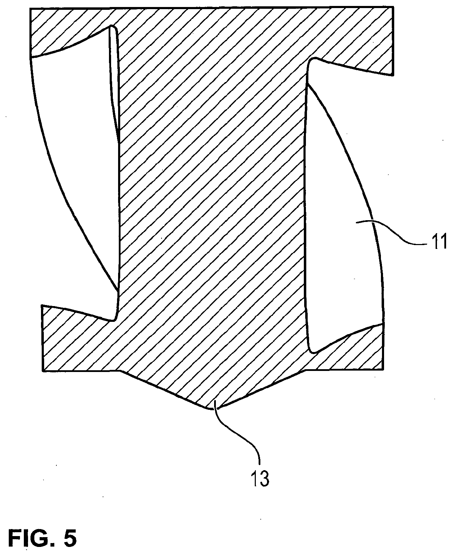

Figur 5 zeigt im Querschnitt den Drallerzeuger (12) im Querschnitt, wobei der Drallerzeuger einen Dorn (13) aufweist.

Nachfolgend wird die vorliegende Erfindung anhand von Ausführungsbeispielen erläutert, wobei die Ausführungsbeispiele keine Einschränkung der Erfindung darstellen.

### Ausführungsbeispiel 1:

Bereitstellen eines äußeren Brennrohres (8) und eines inneren Brennrohres (7) aus Graphit. Beide Rohre haben eine Länge von 40 cm. Das äußere Brennrohr (8) weist einen Außendurchmesser von 18 cm. Das Innere Brennrohr (7) weist einen Durchmesser (D^{A}_{Innen}) von 12 cm auf. Im inneren Brennrohr (7) ist ein Drallerzeuger (9) aus Graphit eingebracht. Der Drallerzeuger (9) weist eine Länge von 14 cm auf, wobei die Leitschaufeln eine einen mittleren Anstellwinkel γ von 60° aufweisen. Die freie Querschnittsfläche beträgt 25%. Der Kern des Drallerzeugers weist einen Durchmesser von 5 cm auf. Der Drallerzeuger schließt mit dem inneren (7) und äußeren Brennrohr (8) bündig ab und ist in das innere Brennrohr (7) eingeklebt.

### Ausführungsbeispiel 2:

Bereitstellen eines äußeren Brennrohres (8) und eines inneren Brennrohres (7) aus Graphit. Beide Rohre haben eine Länge von 40 cm. Das äußere Brennrohr (8) weist einen Durchmesser von 18 cm auf. Das Innere Brennrohr (7) weist einen Durchmesser von 12 cm auf. Im inneren Brennrohr (7) ist ein Drallerzeuger (9) aus Graphit eingebracht. Der Drallerzeuger (9) weist eine Länge von 14 cm auf, wobei die Leitschaufeln einen Anstellwinkel γ von 60° aufweisen. Die freie Querschnittsfläche beträgt 40%. Der Kern des Drallerzeugers weist einen Durchmesser von 5 cm auf. Der Drallerzeuger ist um 2,5 cm im inneren Brennrohr (7) abgesenkt und in das innere Brennrohr (7) eingeklebt.

### Bezugszeichenliste

- 1: Brennvorrichtung
- 2: Brennkammer
- 3: Brenneraustritt
- 4: Flamme
- 5: Chlorgases
- 6: Wasserstoffgases
- 7: inneres Brennrohr
- 8: äußeres Brennrohr
- 9: Kern des Drallerzeugers
- 10: Dorn
- 11: Leitschaufeln
- 12: Drallerzeuger
- 13: Dorn
- 14: Außendurchmesser des Drallerzeugers

## Patentansprüche

1. Brennvorrichtung zur Erzeugung von Halogenwasserstoff, umfassend zumindest zwei konzentrisch angeordnete Brennrohre, wobei im inneren Brennrohr ein Drallerzeuger angeordnet ist, **dadurch gekennzeichnet, dass** das äußere Brennrohr, das innere Brennrohr und der Drallerzeuger korrosionsbeständiges Material umfassen, ausgewählt aus der Gruppe bestehend aus Graphit, synthetischer Graphit, kunstharzimprägnierter Graphit, Siliziumcarbid, siliziumcarbidbeschichteter Graphit, Quarzglas, Aluminiumoxid oder beliebige Mischungen hieraus.

2. Brennvorrichtung nach Anspruch 1, **dadurch gekennzeichnet, dass** der kunstharzimprägnierte Graphit ein phenolharzimprägnierter Graphit ist.

3. Brennvorrichtung nach Anspruch 1, **dadurch gekennzeichnet, dass** der Drallerzeuger eine 0,5 bis 2- fache Länge des inneren Durchmessers des inneren Brennrohrs aufweist.

4. Brennvorrichtung nach Anspruch 1, **dadurch gekennzeichnet, dass** der Drallerzeuger einen Kern und Leitschaufeln umfasst und einen Außendurchmesser von 30 mm bis 300 mm aufweist, wobei der Außendurchmesser des Drallerzeugers der Durchmesser aus dem Kern des Drallerzeugers und den Leitschaufeln ist.

5. Brennvorrichtung nach Anspruch 1, **dadurch gekennzeichnet, dass** der Drallerzeuger einen Kern und Leitschaufeln umfasst und das Verhältnis von Kerndurchmesser zu Außendurchmesser des Drallerzeugers 1:2,5 bis 1:1,5 beträgt, wobei der Kerndurchmesser des Drallerzeugers der Durchmesser des Drallerzeugers ohne Leitschaufeln ist und der Außendurchmesser des Drallerzeugers der Durchmesser aus dem Kern des Drallerzeugers und den Leitschaufeln ist.

6. Brennvorrichtung nach Anspruch 1, **dadurch gekennzeichnet, dass** der Drallerzeuger mindestens zwei Leitschaufeln aufweist.

7. Brennvorrichtung nach Anspruch 6, **dadurch gekennzeichnet, dass** die freie Querschnittsfläche bezogen auf die gesamte angeströmte Querschnittsfläche des Drallerzeugers 15 bis 75 % beträgt, wobei die freie Querschnittsfläche die Summe der freien Flächen zwischen den Leitschaufeln ist und die gesamte angeströmten Fläche des Drallerzeugers die gesamte Querschnittsfläche des Drallerzeugers ist.

8. Brennvorrichtung nach Anspruch 6, **dadurch gekennzeichnet, dass** die Leitschaufeln wendelförmig entlang der Längsachse des Drallerzeugers verlaufen.

9. Brennvorrichtung nach Anspruch 6, **dadurch gekennzeichnet, dass** die Leitschaufeln einen mittleren Anstellwinkel von 35° bis 85° aufweisen, wobei der mittlere Anstellwinkel der Winkel zwischen der Richtung des anströmenden Fluids und der Oberfläche der Leitschaufeln ist.

10. Brennvorrichtung nach Anspruch 1, **dadurch gekennzeichnet, dass** das zugeführte Gas aus dem äußeren Brennrohr axial austritt.

11. Brennvorrichtung nach Anspruch 1, **dadurch gekennzeichnet, dass** das innere und das äußere Brennrohr auf gleicher Höhe abschließen.

12. Brennvorrichtung nach Anspruch 1, **dadurch gekennzeichnet, dass** im inneren Brennrohr auf der angeströmten Seite des Drallerzeugers ein Dorn angeordnet ist.

13. Brennvorrichtung nach Anspruch 12, **dadurch gekennzeichnet, dass** Dorndurchmesser und Kerndurchmesser gleich sind.

14. Brennvorrichtung nach Anspruch 1, **dadurch gekennzeichnet, dass** sich der Durchmesser des äußeren Brennrohres in Richtung des Brennraumes verengt.

15. Brennvorrichtung nach Anspruch 1, **dadurch gekennzeichnet, dass** der Drallerzeuger einen Kern und Leitschaufeln umfasst und der Drallerzeuger im inneren Brennrohr maximal bis auf das 2-fache des Außendurchmessers des Drallerzeugers abgesenkt ist, wobei der Außendurchmesser des Drallerzeugers der Durchmesser aus dem Kern des Drallerzeugers und den Leitschaufeln ist.

## Claims

1. Combustion device for producing hydrogen halide, comprising at least two concentrically arranged combustion tubes, wherein a swirl generator is arranged in the inner combustion tube, **characterised in that** the outer combustion tube, the inner combustion tube and the swirl generator comprise corrosion-resistant material selected from the group consisting of graphite, synthetic graphite, synthetic resin-impregnated graphite, silicon carbide, silicon carbide-coated graphite, quartz glass, aluminium oxide or any mixtures thereof.

2. Combustion device according to claim 1, **characterised in that** the synthetic resin-impregnated graphite is a phenolic resin-impregnated graphite.

3. Combustion device according to claim 1, **characterised in that** the swirl generator has a length 0.5 to 2 times the inner diameter of the inner combustion tube.

4. Combustion device according to claim 1, **characterised in that** the swirl generator comprises a core and guide vanes and has an outer diameter from 30 mm to 300 mm, wherein the outer diameter of the swirl generator is the diameter of the core of the swirl generator and the guide vanes.

5. Combustion device according to claim 1, **characterised in that** the swirl generator comprises a core and guide vanes and the ratio of the core diameter to the outer diameter of the swirl generator is 1:2.5 to 1:1.5, wherein the core diameter of the swirl generator is the diameter of the swirl generator without guide vanes and the outer diameter of the swirl generator is the diameter of the core of the swirl generator and the guide vanes.

6. Combustion device according to claim 1, **characterised in that** the swirl generator has at least two guide vanes,

7. Combustion device according to claim 6, **characterised in that** the free cross-sectional area relative to the total cross-sectional area of the swirl generator upon which the flow is incident is 15 to 75%, wherein the free cross-sectional area is the sum of the free areas between the guide vanes and the total area of the swirl generator upon which the flow is incident is the total cross-sectional area of the swirl generator.

8. Combustion device according to claim 6, **characterised in that** the guide vanes extend helically along the longitudinal axis of the swirl generator.

9. Combustion device according to claim 6, **characterised in that** the guide vanes have a mean incident angle from 35° to 85°, wherein the mean work angle is the angle between the direction of the inflowing fluid and the surface of the guide vanes.

10. Combustion device according to claim 1, **characterised in that** the supplied gas exits axially from the outer combustion tube.

11. Combustion device according to claim 1, **characterised in that** the inner and the outer combustion tube terminate at the same height.

12. Combustion device according to claim 1, **characterised in that** a mandrel is arranged in the inner combustion tube on the side of the swirl generator upon which the flow is incident.

13. Combustion device according to claim 12, **characterised in that** the mandrel diameter and the core diameter are the same.

14. Combustion device according to claim 1, **characterised in that** the diameter of the outer combustion tube narrows in the direction of the combustion chamber.

15. Combustion device according to claim 1, **characterised in that** the swirl generator comprises a core and guide vanes and the swirl generator is lowered in the inner combustion tube to a maximum of 2 times the outer diameter of the swirl generator, wherein the outer diameter of the swirl generator is the diameter of the core of the swirl generator and the guide vanes.

## Revendications

1. Dispositif de combustion pour la production d'halogénure d'hydrogène, comprenant au moins deux tubes de combustion disposés de manière concentrique, un générateur de tourbillon étant disposé dans le tube de combustion intérieur, **caractérisé en ce que** le tube de combustion extérieur, le tube de combustion intérieur et le générateur de tourbillon comprennent un matériau résistant à la corrosion choisi dans le groupe constitué par le graphite, le graphite synthétique, le graphite imprégné de résine synthétique, le carbure de silicium, le graphite revêtu de carbure de silicium, le verre de quartz, l'oxyde d'aluminium ou des mélanges de ceux-ci.

2. Dispositif de combustion selon la revendication 1, **caractérisé en ce que** le graphite imprégné de résine synthétique est un graphite imprégné de résine phénolique.

3. Dispositif de combustion selon la revendication 1, **caractérisé en ce que** le générateur de tourbillon a une longueur de 0,5 à 2 fois le diamètre intérieur du tube de combustion intérieur.

4. Dispositif de combustion selon la revendication 1, **caractérisé en ce que** le générateur de tourbillon comprend un noyau et des aubes directrices et a un diamètre extérieur de 30 à 300 mm, le diamètre extérieur du générateur de tourbillon étant le diamètre résultant du noyau du générateur de tourbillon et des aubes directrices.

5. Dispositif de combustion selon la revendication 1, **caractérisé en ce que** le générateur de tourbillon comprend un noyau et des aubes directrices, et le rapport du diamètre du noyau au diamètre extérieur du générateur de tourbillon est de 1:2,5 à 1:1,5, le diamètre du noyau du générateur de tourbillon étant le diamètre du générateur de tourbillon sans aubes directrices, et le diamètre extérieur du générateur de tourbillon étant le diamètre résultant du noyau du générateur de tourbillon et des aubes directrices.

6. Dispositif de combustion selon la revendication 1, **caractérisé en ce que** le générateur de tourbillon comporte au moins deux aubes directrices.

7. Dispositif de combustion selon la revendication 6, **caractérisé en ce que** la surface de section transversale libre est de 15 à 75 % par rapport à la surface de section transversale d'entrée totale du générateur de tourbillon, la surface de section transversale libre étant la somme des surfaces libres entre les aubes directrices, et la surface d'entrée totale du générateur de tourbillon étant la surface de section transversale totale du générateur de tourbillon.

8. Dispositif de combustion selon la revendication 6, **caractérisé en ce que** les aubes directrices s'étendent en forme d'hélice le long de l'axe longitudinal du générateur de tourbillon.

9. Dispositif de combustion selon la revendication 6, **caractérisé en ce que** les aubes directrices ont un angle d'attaque moyen de 35 à 85°, l'angle d'attaque moyen étant l'angle entre la direction du fluide entrant et la surface des aubes directrices.

10. Dispositif de combustion selon la revendication 1, **caractérisé en ce que** le gaz amené sort axialement du tube de combustion extérieur.

11. Dispositif de combustion selon la revendication 1, **caractérisé en ce que** le tube de combustion intérieur et le tube de combustion extérieur se terminent au même niveau.

12. Dispositif de combustion selon la revendication 1, **caractérisé en ce qu'**un mandrin est disposé dans le tube de combustion intérieur du côté d'entrée du générateur de tourbillon.

13. Dispositif de combustion selon la revendication 12, **caractérisé en ce que** le diamètre du mandrin et le diamètre du noyau sont identiques.

14. Dispositif de combustion selon la revendication 1, **caractérisé en ce que** le diamètre du tube de combustion extérieur se rétrécit dans la direction de la chambre de combustion.

15. Dispositif de combustion selon la revendication 1, **caractérisé en ce que** le générateur de tourbillon comprend un noyau et des aubes directrices, et **en ce que** le générateur de tourbillon est abaissé dans le tube de combustion intérieur jusqu'à un maximum de deux fois le diamètre extérieur du générateur de tourbillon, le diamètre extérieur du générateur de tourbillon étant le diamètre résultant du noyau du générateur de tourbillon et des aubes directrices.
